# FASCICULE DE BREVET EUROPEEN

(11) **EP 1 932 052 B1**
(45) Date de publication et mention de la délivrance du brevet: **25.02.2009**
(21) Numéro de dépôt: 06831194.3
(22) Date de dépôt: 19.09.2006
(51) Int. Cl.: G02B 27/01

(54) **DISPOSITIF BINOCULAIRE D'AFFICHAGE D'INFORMATIONS**
INFORMATIONSANZEIGENDES BINOKULARES GERÄT
INFORMATION DISPLAYING BINOCULAR DEVICE

(30) Priorité: 06.10.2005 FR 0553033
(43) Date de publication de la demande: 18.06.2008
(73) Titulaire: ESSILOR INTERNATIONAL COMPAGNIE GENERALE D'OPTIQUE, 94227 Charenton cédex (FR)
(72) Inventeur: BUCHON, Cédric, F-94227 Charenton le Pont (FR); FELTEN, Yohann, F-94227 Charenton le Pont (FR)
(74) Mandataire: Lenne, Laurence
(86) Numéro de dépôt international: PCT/FR2006/050905
(87) Numéro de publication internationale: WO 2007/039691

(56) Documents cités:
- WO-A-02/056091
- US-A- 4 519 674
- US-A- 5 694 257
- US-A1- 2005 078 378
- US-A1- 2005 174 651

## Description

L'invention concerne un dispositif binoculaire d'affichage d'informations, de type images ou multimédia.

Elle se rapporte plus précisément à un dispositif binoculaire d'affichage d'informations comprenant un support destiné à être posé sur le nez et supportant un élément d'affichage droit et un élément d'affichage gauche destinés chacun à être placé devant un oeil et comportant chacun un guide optique propageant un faisceau de rayons lumineux émis par un dispositif de génération de faisceaux vers une face d'entrée, jusqu'à une face de sortie où le faisceau est dirigé vers l'oeil correspondant.

Un tel dispositif est décrit dans le document de brevet WO 2004/097462.

Le dispositif décrit dans ce document comporte un support destiné à être posé sur le nez et sur lequel sont suspendus un élément d'affichage droit et un élément d'affichage gauche. Le dispositif comprend également un agencement de réglage de l'écart pupillaire assurant le déplacement relatif des guides optiques et du support, afin de régler la distance entre ces guides optiques. Selon une variante de réalisation, cet agencement de réglage peut consister en un agencement de rail et de glissière, par lequel sont suspendus les guides optiques.

Ce type de dispositif d'affichage pose le problème technique suivant.

Il est en pratique peu réalisable car, compte tenu des tolérances des pièces le constituant, il n'assure pas de rattrapage de jeu. Or, pour un confort de vision des images droite et gauche produites par l'afficheur, il est très important que ces deux images soient à une même hauteur. Cette condition ne peut être respectée par l'afficheur décrit dans ce document de l'art antérieur.

L'invention résout ce problème en proposant un dispositif binoculaire d'affichage qui soit de constitution fiable, simple et économiquement intéressant.

Pour ce faire, elle propose un dispositif binoculaire d'affichage d'informations comprenant un support destiné à être posé sur le nez et supportant un élément d'affichage droit et un élément d'affichage gauche destinés chacun à être placé devant un oeil et comportant chacun un guide optique propageant un faisceau de rayons lumineux émis vers une face d'entrée par un dispositif de génération de faisceaux, jusqu'à une face de sortie où le faisceau est dirigé vers l'oeil correspondant, dispositif binoculaire comprenant un agencement de réglage de l'écart pupillaire assurant le déplacement relatif d'au moins un des guides optiques et dudit support, afin de régler la distance entre ces guides optiques, dispositif caractérisé en ce que lesdits guides optiques sont disposés au-dessus du dit support et sont maintenus par une barrette disposée au-dessus des guides optiques et solidarisée au dit support au moyen d'au moins une entretoise, au moins un moyen de rattrapage de jeu étant intercalé entre ladite barrette et lesdits guides optiques.

Selon un mode de réalisation préféré, ledit moyen de rattrapage de jeu est constitué d'un élément de compliance intercalé entre ladite barrette et chaque guide optique.

De préférence, le dispositif conforme à l'invention comporte une pièce couvercle reliée au dit support et enfermant les guides optiques et ladite barrette.

Avantageusement, le dispositif binoculaire comporte en regard des ladite face de sortie des dits guides optiques un dispositif support de lentille correctrice de la vue.

Ledit agencement de réglage de l'écart pupillaire peut être constitué d'un agencement de rail et de glissière, respectivement porté par ledit support et ledit guide optique respectif.

Ladite glissière, de préférence, est constituée d'une plaque de section transversale en Té et solidarisée au dit guide optique.

Et le dit rail est, avantageusement, conformé dans ledit support.

Le dit agencement de réglage peut présenter un dispositif actionnable de l'extérieur, manuellement ou de façon motorisée

Et ledit dispositif actionnable peut comporter un dispositif de vis et d'écrou relié à ladite plaque et qui peut être actionné au travers d'un orifice latéral agencé sur ledit support.

L'invention est décrite ci-après plus en détail à l'aide de figures ne représentant qu'un mode de réalisation préféré de l'invention.
La figure 1 est une vue en perspective d'un dispositif binoculaire d'affichage conforme à l'invention, vu de l'avant.
La figure 2 est une vue en perspective d'un dispositif binoculaire d'affichage conforme à l'invention, vu de l'arrière.
La figure 3 est une vue en perspective éclatée d'un dispositif binoculaire d'affichage conforme à l'invention, vu de l'avant.
La figure 4 est une vue en perspective éclatée d'un dispositif binoculaire d'affichage conforme à l'invention, vu de l'arrière.
La figure 5 est une vue en perspective partielle d'un dispositif binoculaire d'affichage conforme à l'invention, vu de l'arrière.
La figure 6 est une vue en perspective de détail d'un dispositif binoculaire d'affichage conforme à l'invention, vu de l'arrière.
La figure 7 est une vue en perspective d'une pièce particulière d'un dispositif binoculaire d'affichage conforme à l'invention.
La figure 8 est une vue en perspective partielle d'un dispositif binoculaire d'affichage équipé d'électronique conforme à l'invention, vu de l'arrière.

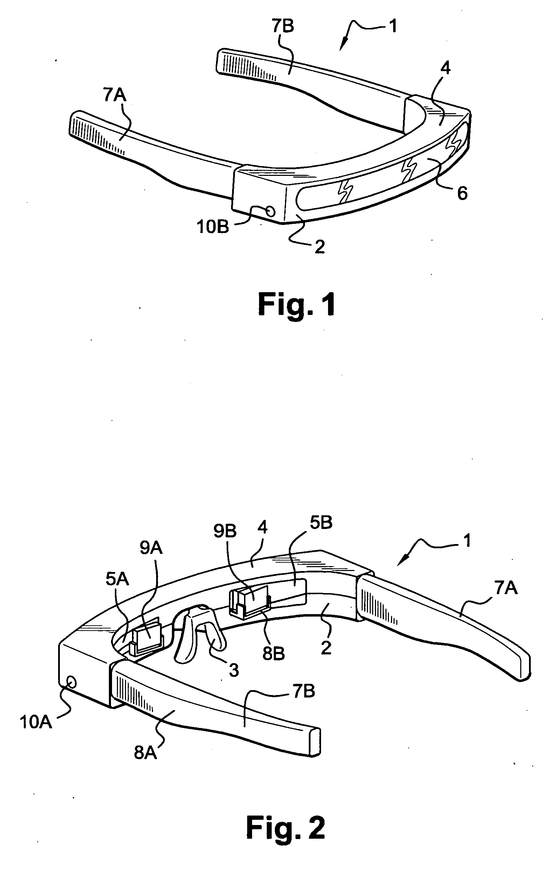

Comme représenté sur les figures 1 et 2, un dispositif binoculaire 1 d'affichage d'informations comprend un support 2 destiné à être posé sur le nez au moyen d'un élément de type pince nez 3 qui lui est fixé. Il comporte également une pièce de couvercle 4 relié au support 2 et enfermant des guides optiques 5A, 5B et d'autres pièces constitutives qui seront précisées plus loin.

La face avant du dispositif binoculaire, particulièrement visible sur la figure 1, présente une lame transparente 6 mise en place entre le support 2 et la pièce de couvercle 4. Deux branches 7A, 7B de type branches de lunette assurent le maintien du dispositif binoculaire sur les oreilles du porteur.

Sur la face arrière du dispositif, particulièrement visible sur la figure 2, sont agencées deux fenêtres devant lesquelles sont disposés les guides optiques 5A, 5B. De plus, au niveau de ces fenêtres, sont disposés des rails en forme de U, 8A, 8B, sur lesquels peuvent être disposées des lentilles de correction de la vue 9A, 9B.

Le support 2 présente deux orifices latéraux 10A, 10B, qui permettent le réglage des guides optiques 5A, 5B, à l'écart pupillaire du porteur grâce à un agencement de réglage qui sera précisé plus loin.

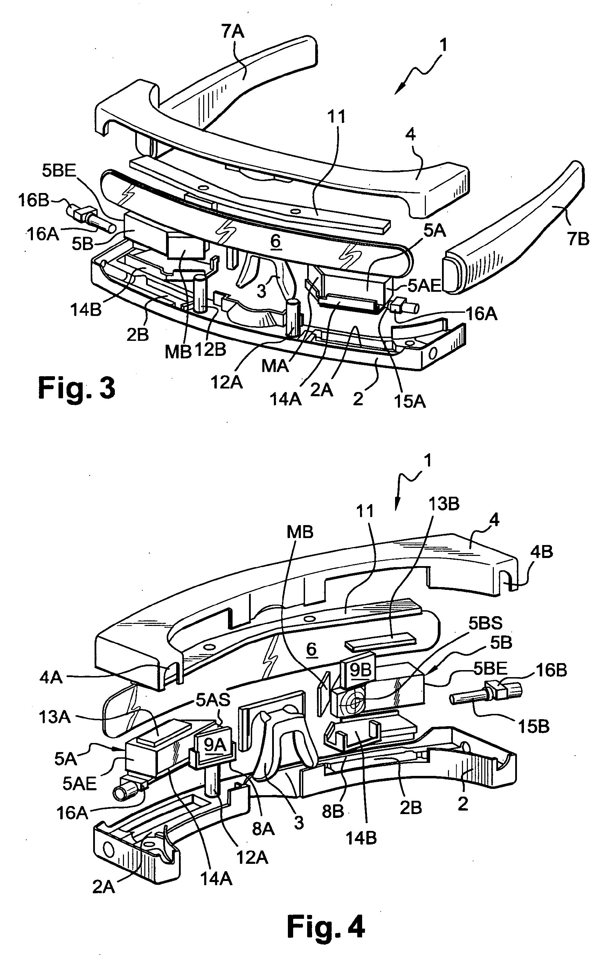

Dans ce qui suit en référence aux figures 3 à 7, il n'est volontairement pas fait mention des éléments électroniques intégrés dans le binoculaire, qui ne sont pas représentés sur les figures en question, ces figures ne considérant que les pièces mécaniques et optiques constitutives.

Comme mieux visible sur les figures 3 et 4, les branches n'étant pas représentées sur la figure 4, le dispositif binoculaire 1 comprend donc le support 2 qui supporte lui-même un élément d'affichage droit et un élément d'affichage gauche destinés chacun à être placé devant l'oeil du porteur et comportant chacun un guide optique 5A, 5B propageant un faisceau de rayons lumineux émis par un dispositif de génération de faisceaux non représenté vers une face d'entrée 5AE, 5BE jusqu'à une face de sortie 5AS, 5BS où le faisceau est dirigé vers l'oeil correspondant.

Le dispositif binoculaire 1 comprend un agencement de réglage de l'écart pupillaire assurant le déplacement relatif d'au moins un des guides optiques 5A, 5B et du support 2, afin de régler la distance entre ces guides.

Les guides optiques 5A, 5B, sont disposés au-dessus du support 2 et sont maintenus par une barrette 11 disposée au-dessus des guides optiques et solidarisée au support 2 au moyen d'au moins une entretoise, plus précisément de deux entretoises 12A, 12B, au moins un moyen de rattrapage de jeu étant intercalé entre la barrette 11 et les guides optiques 5A, 5B.

De préférence, ce moyen de rattrapage de jeu est constitué d'un élément élastique ou élément de compliance, ici un coussinet élastique 13A, 13B, intercalée entre la barrette 11 et chaque guide optique 5A, 5B. Cet élément élastique peut être un coussinet en matière plastique expansée, de type mousse.

L'agencement de réglage de l'écart pupillaire est constitué d'un agencement de rail et de glissière, respectivement porté par le support 2 et le guide optique respectif 5A, 5B. La glissière est constituée d'une plaque 14A, 14B de section transversale en Té et solidarisée au guide optique correspondant, avantageusement par collage. Le rail est conformé dans le support 2, par une rainure 2A, 2B dans laquelle est emboîtée la partie de section de la plaque glissière correspondant au pied du Té.

Cette plaque glissière 14A, 14B comporte également le rail en forme de U, 8A, 8B, qui forme un dispositif support de lentille correctrice de la vue.

Ce dispositif de réglage de l'écart pupillaire peut être actionné manuellement ou de façon motorisée. Il peut permettre un réglage unique et symétrique ou deux réglages indépendants, chaque réglage permettant l'ajustement d'un demi-écart pupillaire.

Selon l'exemple représenté, il est actionnable manuellement de l'extérieur à l'aide des deux orifices latéraux 10A, 10B. Chaque plaque glissière 14A, 14B, est relié à un dispositif de vis 15A, 15B, et d'écrou 16A, 16B, qui peut être actionné au travers de l'orifice latéral correspondant agencé sur le support 2.

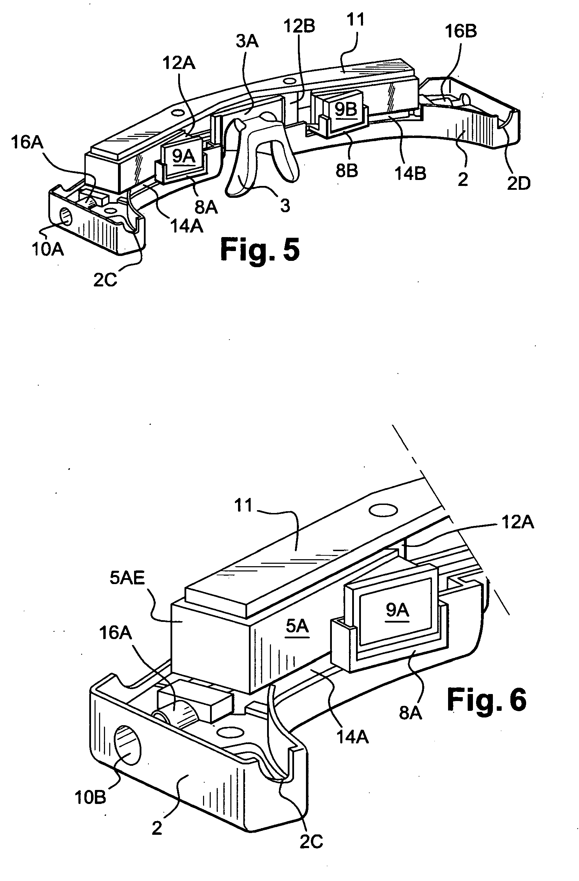

Le montage des différentes pièces constitutives est particulièrement simple. Toutes les pièces sont prises en sandwich entre le support 2 et la pièce de couvercle 4, comme illustré sur les figures 5 et 6, où la pièce de couvercle n'est pas encore montée.

Chaque plaque glissière 14A, 14B est solidarisée au guide optique correspondant 5A, 5B, puis l'ensemble est posé dans le rail correspondant 2A, 2B du support 2. Les deux entretoises 12A, 12B sont mises en place et reçoivent la barrette 11, après intercalage des coussinets 13A, 13B. Au moyen de vis traversant longitudinalement ces entretoises et non représentées, la fixation de la barrette 11 au support 2 est réalisée, avec compression des coussinets et solidarisation des guides optiques 5A, 5B. Les agencements de vis et écrous sont mis en place, les écrous 16A, 16B étant logés dans des rainures correspondantes moulées dans le support 2. L'élément de type pince nez 3 porté par une embase 3A est mis en place, par coulissement de cette embase dans des rainures également moulées sur le support 2. Les branches 7A, 7B peuvent alors être emboîtées par leur extrémité de liaison dans des fentes 2C, 2D agencées dans le support 2. La pièce de couvercle 4 peut finalement être montée sur cet ensemble, cette pièce comportant également des fentes 4A, 4B, venant enserrer l'extrémité de liaison des branches 7A, 7B.

Sur les figures 5 et 6, sont également disposées des lentilles correctrices 9A, 9B, de la vue, qui sont disposées à la volonté du porteur dans les rails en U, 8A, 8B.

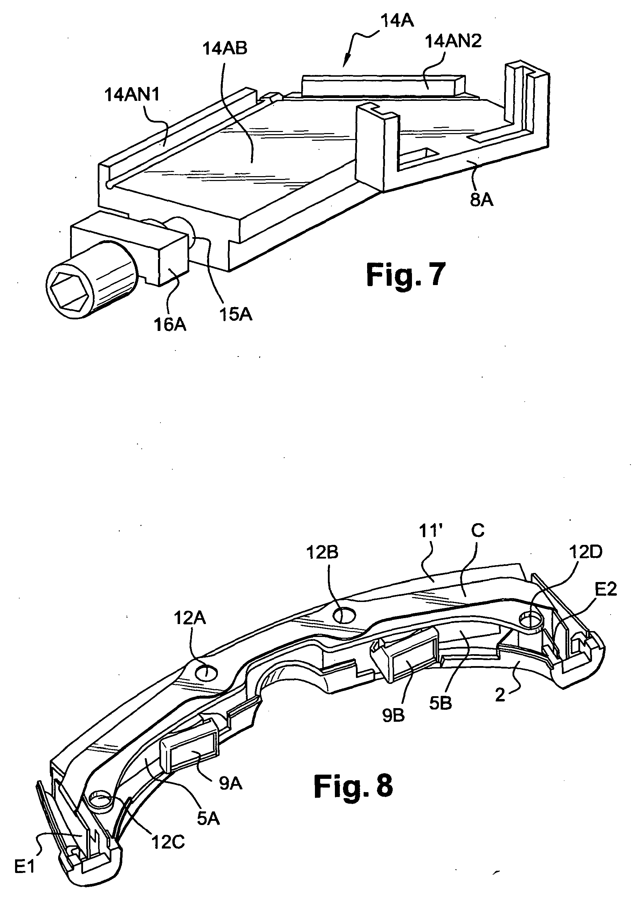

La figure 7 représente plus en détail une plaque glissière 14A avec son agencement de réglage associé.

La base 14AB de cette plaque présente donc une section en Té formant glissière comme il a déjà été vu. Sur sa face supérieure, cette base comporte au moins deux nervures 14AN1, 14AN2 de positionnement du guide optique. Elle comprend enfin un prolongement orienté perpendiculairement à la face de sortie du guide optique destiné à être supporté et qui porte le support de lentille correctrice en forme de rail en U 8A.

La vis de réglage 15A est solidarisée latéralement à la base 14AB de la plaque glissière et traverse un écrou 16A qui est destiné à être bloqué en rotation dans le support 2 du dispositif binoculaire. Par utilisation d'un outil, ici à six pans, au travers de l'orifice 10A du support, la vis 15A est tournée et entraîne avec elle la plaque glissière 14A dans le rail 2A du support 2 du dispositif binoculaire.

Divers types de guide optique peuvent être utilisés pour constituer le dispositif binoculaire conforme à l'invention.

Dans l'exemple représenté, il s'agit d'un imageur du même type que ceux décrits dans le brevet US 6 204 974. Un tel imageur optique est destiné à mettre en forme les faisceaux optiques issus d'un système électronique et optique de génération de faisceaux lumineux à partir d'un signal électronique, de type écran miniature, diode laser, diode électroluminescente. L'imageur optique dirige les faisceaux optiques vers l'oeil du porteur pour permettre la visualisation du contenu informationnel.

Cet imageur est constitué d'un prisme portant la surface d'entrée 5AE, 5BE des rayons lumineux et d'un combineur dirigeant les faisceaux optiques vers l'oeil du porteur et portant la surface de sortie 5AS, 5BS des rayons lumineux. A l'interface entre le prisme et le combineur est disposé un miroir MA, MB réfléchissant les rayons optiques vers l'oeil.

La figure 8 représente une vue en perspective partielle d'une variante de dispositif binoculaire d'affichage équipé d'électronique, conforme à l'invention.

Cette variante diffère du mode de réalisation par la conception de la barrette 11' qui est ici fixée au support 2 par quatre entretoises 12A, 12B, 12C, 12D, deux centrales 12A, 12B, et deux d'extrémité 12C, 12D.

De façon générale, quelle que soit la variante de réalisation, comme également illustrée sur cette dernière figure, un écran miniature E1, E2, est disposé en face de la face d'entrée de chaque guide optique 5A, 5B.

Un de ces deux écrans, par exemple E1, est connecté par un câble non représenté qui lui transmet un signal électronique porteur d'une information à partir d'une source d'information. Ce câble est avantageusement logé dans la branche 7A correspondante.

Un conducteur sous forme de bande connecte cet écran E1 au second écran E2, assurant la transmission de cette information à l'autre écran. Ainsi les deux écrans émettent la même image pixellisée correspondant à l'information. Ce connecteur C est avantageusement disposé sur la barrette 11 ou 11', l'agencement étant ensuite refermé par la pièce de couvercle 4.

## Revendications

1. Dispositif binoculaire d'affichage d'informations comprenant un support (2) destiné à être posé sur le nez et supportant un élément d'affichage droit et un élément d'affichage gauche destinés chacun à être placé devant un oeil et comportant chacun un guide optique (5A, 5B) propageant un faisceau de rayons lumineux émis vers une face d'entrée (5AE, 5BE) par un dispositif de génération de faisceaux, jusqu'à une face de sortie (SAS, 5BS) où le faisceau est dirigé vers l'oeil correspondant, dispositif binoculaire comprenant un agencement de réglage de l'écart pupillaire assurant le déplacement relatif d'au moins un des guides optiques et dudit support, afin de régler la distance entre ces guides optiques, dispositif **caractérisé en ce que** lesdits guides optiques (5A, 5B), sont disposés au-dessus du dit support (2) et sont maintenus par une barrette (11) disposée au-dessus des guides optiques et solidarisée au dit support au moyen d'au moins une entretoise (12A, 12B, 12C, 12D), au moins un moyen de rattrapage de jeu étant intercalé entre ladite barrette et lesdits guides optiques.

2. Dispositif binoculaire selon la revendication 1, **caractérisé en ce que** ledit moyen de rattrapage de jeu est constitué d'un élément de compliance intercalé entre ladite barrette et chaque guide optique.

3. Dispositif binoculaire selon l'une des revendications précédentes, **caractérisé en ce qu'**il comporte une pièce couvercle (4) reliée au dit support et enfermant les guides optiques et ladite barrette.

4. Dispositif binoculaire selon l'une des revendications précédentes, **caractérisé en ce qu'**il comporte en regard de ladite face de sortie des dits guides optiques un dispositif support de lentille correctrice de la vue (8A, 8B).

5. Dispositif binoculaire selon l'une des revendications précédentes, **caractérisé en ce que** ledit agencement de réglage de l'écart pupillaire est constitué d'un agencement de rail et de glissière, respectivement porté par ledit support (2) et ledit guide optique respectif (5A, 5B).

6. Dispositif binoculaire selon la revendication 5, **caractérisé en ce que** ladite glissière (14A, 14B) est constituée d'une plaque de section transversale en Té et solidarisée au dit guide optique.

7. Dispositif binoculaire selon la revendication 5 ou 6, **caractérisé en ce que** le dit rail (2A, 2B) est conformé dans ledit support.

8. Dispositif binoculaire selon l'une des revendications précédentes, **caractérisé en ce que** ledit agencement de réglage présente un dispositif actionnable de l'extérieur, manuellement ou de façon motorisée.

9. Dispositif selon la revendication 6 et 8, **caractérisé en ce que** ledit dispositif actionnable comporte un dispositif de vis et d'écrou (16A, 16B) relié à ladite plaque et qui peut être actionné au travers d'un orifice latéral (10A, 10B) agencé sur ledit support.

## Claims

1. A binocular device for displaying information, the device comprising a support (2) for placing on the nose and supporting a right display element and a left display element each designed to be placed in front of an eye and each comprising a light guide (5A, 5B) for receiving a beam of light rays emitted by a beam generator device towards an inlet face (5AE, 5B3) and for propagating the beam to an outlet face (5AS, 5BS) where the beam is directed towards the corresponding eye, the binocular device having an arrangement for adjusting the pupillary distance by moving at least one of the light guides relative to said support so as to adjust the distance between the light guides, the device being **characterized in that** said light guides (5A, 5B) are disposed over a said support (2) and are held by a strip (11) disposed over the light guides and secured to said support by means of at least one spacer (12A, 12B, 12C, 12D), at least one slack takeup means being interposed between said strip and said light guides.

2. A binocular device according to claim 1, **characterized in that** said slack takeup means are constituted by a compliance element interposed between said strip and each light guide.

3. A binocular device according to either preceding claim, **characterized in that** it includes a cover part (4) connected to said support and enclosing the light guides and said strip.

4. A binocular device according to any preceding claim, **characterized in that** it includes, facing said outlet faces of said light guides, respective devices (8A, 8B) for supporting eyesight-correcting lenses.

5. A binocular device according to any preceding claim, **characterized in that** said arrangement for adjusting the pupillary distance is constituted by a rail and slideway arrangement carried respectively by said support (2) and by said respective light guide (5A, 5B).

6. A binocular device according to claim 5, **characterized in that** said slideway (14A, 14B) is constituted by a plate of T-shaped cross-section and secured to said light guide.

7. A binocular device according to claim 5 or claim 6, **characterized in that** said rail (2A, 2B) is shaped in said support.

8. A binocular device according to any preceding claim, **characterized in that** said adjustment arrangement presents a device that can be actuated from the outside, manually or under motor drive.

9. A device according to claims 6 and 8, **characterized in that** said actuatable device comprises a screw-and-nut device (16A, 16B) connected to said plate and capable of being actuated through a lateral orifice (10A, 10B) arranged in said support.

## Patentansprüche

1. Binokulare Informationsanzeigevorrichtung, umfassend ein Gestell (2), das dazu gedacht ist, auf die Nase gesetzt zu werden und ein rechtes Anzeigeelement und ein linkes Anzeigeelement trägt, die jeweils dazu gedacht sind, vor einem Auge angeordnet zu werden und jeweils einen Lichtleiter (5A, 5B) umfassen, der ein Lichtstrahlenbündel, das von einer Strahlenbündelerzeugungsvorrichtung in Richtung auf eine Eingangsseite (5AE, 5BE) abgestrahlt wird, bis zu einer Ausgangsseite (5AS, 5BS) zu verbreiten, wo das Strahlenbündel auf das entsprechende Auge gerichtet wird, wobei die binokulare Vorrichtung eine Anordnung zum Einstellen des Pupillenabstands umfasst, welche die relative Bewegung mindestens eines der Lichtleiter und des Gestells sicherstellt, um den Abstand zwischen diesen Lichtleitern einzustellen, wobei die Vorrichtung **dadurch gekennzeichnet ist, dass** die Lichtleiter (5A, 5B) oberhalb des Gestells (2) angeordnet sind und von einem Bügel (11) gehalten werden, der oberhalb der Lichtleiter angeordnet ist und mittels mindestens einem Steg (12A, 12B, 12C, 12D) mit dem Gestell fest verbunden ist, wobei mindestens ein Spielausgleichmittel zwischen dem Bügel und den Lichtleitern eingeschoben ist.

2. Binokulare Vorrichtung nach Anspruch 1, **dadurch gekennzeichnet, dass** das Spielausgleichmittel aus einem Federelement besteht, das zwischen dem Bügel und jedem Lichtleiter eingeschoben ist.

3. Binokulare Vorrichtung nach einem der vorhergehenden Ansprüche, **dadurch gekennzeichnet, dass** sie ein Abdeckungsstück (4) umfasst, das mit dem Gestell verbunden ist und die Lichtleiter und den Bügel einschließt.

4. Binokulare Vorrichtung nach einem der vorhergehenden Ansprüche, **dadurch gekennzeichnet, dass** sie gegenüber der Ausgangsseite der Lichtleiter eine Vorrichtung zum Tragen von Korrekturlinsen (8A, 8B) umfasst.

5. Binokulare Vorrichtung nach einem der vorhergehenden Ansprüche, **dadurch gekennzeichnet, dass** die Anordnung zum Einstellen des Pupillenabstands aus einer Anordnung aus Schiene und Gleitbahn besteht, die jeweils von dem Gestell (2) und dem jeweiligen Lichtleiter (5A, 5B) getragen wird.

6. Binokulare Vorrichtung nach Anspruch 5, **dadurch gekennzeichnet, dass** die Gleitbahn (14A, 14B) aus einer Platte mit T-förmigem Querschnitt besteht, und mit dem Lichtleiter fest verbunden ist.

7. Binokulare Vorrichtung nach Anspruch 5 oder 6, **dadurch gekennzeichnet, dass** die Schiene (2A, 2B) in das Gestell eingepasst ist.

8. Binokulare Vorrichtung nach einem der vorhergehenden Ansprüche, **dadurch gekennzeichnet, dass** die Einstellanordnung eine Vorrichtung aufweist, die entweder manuell oder motorisiert von außen zu betätigen ist.

9. Vorrichtung nach Anspruch 6 und 8, **dadurch gekennzeichnet, dass** die betätigbare Vorrichtung eine Schrauben-Mutter-Vorrichtung (16A, 16B) umfasst, die mit der Platte verbunden ist und die durch eine Seitenöffnung (10A, 10B) betätigt werden kann, die auf dem Gestell angeordnet ist.
